(19) Europäisches Patentamt
European Patent Office
Office européen des brevets

(11) Veröffentlichungsnummer: **0 175 122**
**A2**

(12) **EUROPÄISCHE PATENTANMELDUNG**

(21) Anmeldenummer: **85109877.2**

(22) Anmeldetag: **06.08.85**

(51) Int. Cl.⁴: **C 08 F 10/00**, C 08 F 4/06, C 08 F 2/44

(30) Priorität: **18.08.84 DE 3430518**

(43) Veröffentlichungstag der Anmeldung: **26.03.86 Patentblatt 86/13**

(84) Benannte Vertragsstaaten: **DE FR GB IT**

(71) Anmelder: **BAYER AG, Konzernverwaltung RP Patentabteilung, D-5090 Leverkusen 1 Bayerwerk (DE)**

(72) Erfinder: **Musch, Rüdiger, Dr., Altenberger-Dom-Strasse 169, D-5060 Bergisch Gladbach 2 (DE)**
Erfinder: **Nuyken, Oskar, Prof. Dr., Ignatz-Günther-Strasse 12, D-8000 München 81 (DE)**
Erfinder: **Pask, Stephen David, Dr., Goethestrasse 57 D, D-4047 Dormagen 1 (DE)**
Erfinder: **Vischer, Axel, Dr., Schleissheimer Strasse 15, D-8046 Garching (DE)**
Erfinder: **Walter, Michael, Dr., Haagweg 6, D-6701 Ruppertsberg (DE)**

(54) **Verfahren zur Herstellung von Polymeren mit reaktiven Endgruppen.**

(57) Ein verbessertes Verfahren zur Herstellung von Polymeren mit Halogenendgruppen aus kationisch polymerisierbaren Monomeren, wobei man das Monomere in einem inerten Lösungsmittel bei +10 °C bis −130 °C mit Hilfe eines Katalysatorsystems aus einem Metallhalogenid und einem organischen Halogenid polymerisiert, verwendet als organische Halogenide Verbindungen der allgemeinen Formel

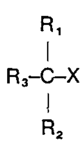

wobei

X ein Halogenatom ist,

$R_1$, $R_2$, $R_3$ $C_5$–$C_{10}$-Cycloalkyl, geradkettiges oder verzweigtes $C_1$–$C_{20}$-Alkyl oder

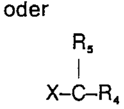

bedeuten, wobei

$R_4$ und $R_5$ $C_5$–$C_{10}$-Cycloalkyl oder geradkettiges oder verzweigtes $C_1$–$C_{20}$-Alkyl ist,

und das organische Halogenid mindestens 5 C-Atome und maximal 50 C-Atome besitzt und in Konzentrationen von $10^{-1}$ bis $10^{-6}$ Mol pro Mol Monomer vorliegt und als Metallhalogenide $BX_3$, $SnX_4$, $TiX_4$, $SbX_5$ oder $FeX_3$, wobei X ein Halogenatom ist, im 2–500fachen molaren Überschuß, bezogen auf das organische Halogenid, zugesetzt werden.

EP 0 175 122 A2

BAYER AKTIENGESELLSCHAFT 5090 Leverkusen, Bayerwerk
Konzernverwaltung RP Jo/by-c
Patentabteilung

# Verfahren zur Herstellung von Polymeren mit reaktiven Endgruppen

Die Anmeldung betrifft die Herstellung von makromolekularen Stoffen mit endständigen reaktiven Gruppen durch kationische Polymerisation von kationisch polymerisierbaren Monomeren in Gegenwart von bestimmten Metallhalogeniden und bestimmten Halogenkohlenwasserstoffen.

Ein Reaktionssystem, das durch kationische Polymerisation Produkte mit zwei reaktiven Endgruppen, sogenannte Telechele, liefert, wird von J.P. Kennedy in J. Polym. Sci., Polymer Chem. Ed. 18, 1523 (1980) beschrieben. Solche Makromoleküle mit definierten Endgruppen sollten ausgezeichnete Präpolymere für die Herstellung von z.B. maßgeschneiderten Copolymeren mit bekannter, einstellbarer Blocklänge sein.

Voraussetzung dafür ist jedoch ein möglichst hoher Reinheitsgrad solcher Präpolymere, d.h. jede Polymerkette des Reaktionsproduktes sollte je nach Reaktionsbedingungen die gleiche Zahl an reaktiven Endgruppen (z.B. 1, 2 oder 3) tragen.

Bei der von Kennedy beschriebenen sogenannten "Inifer-Methode" wird die Polymerisation von Isobuten in Gegenwart von Friedel-Crafts Säuren und aromatischen Halogenkohlenwasserstoffen als Initiatoren durchgeführt. Wie J.P. Kennedy, S.Y. Huang und S. Feinberg in J. Polymer Sci., Chem. Ed. 15, 2801-2820, 2869-92 zeigen, waren die von ihnen getesteten gesättigten, aliphatischen halogenierten Kohlenwasserstoffe als Initiatoren nicht geeignet. Bei der Verwendung aromatischer Halogenkohlenwasserstoffe findet jedoch zu Polymerisationsbeginn als unerwünschte Nebenreaktion eine teilweise Friedel-Crafts Alkylierung des aromatischen Initiators durch das Monomere statt, die den Wert der Methode stark einschränkt, denn durch diese Nebenreaktion entstehen Makromoleküle, die eine nichtreaktive Indanendgruppe tragen, so daß im Polymeren Produkte mit unterschiedlicher Funktionalität vorliegen. Dieser Effekt tritt besonders stark bei höheren Polymerisationstemperaturen und höheren Konzentrationen von Initiatoren, bezogen auf das Monomere auf.

Es war daher überraschend festzustellen, daß bei Verwendung bestimmter aliphatischer halogenierter Kohlenwasserstoffe und in Gegenwart bestimmter Metallhalogenide die kationische Polymerisation von z.B. Isobuten entgegen der Auffassung von Kennedy doch abläuft, wobei verständlicherweise eine Indanbildung nicht auftritt.

Gegenstand der Erfindung ist daher ein Verfahren zur Herstellung von Polymeren mit Halogenendgruppen aus kationisch polymerisierbaren Monomeren, wobei man das Monomere in einem inerten Lösungsmittel bei +10 bis -130°C mit Hilfe eines Katalysatorsystems aus einem Metallhalogenid und einem organischen Halogenid polymerisiert, dadurch gekennzeichnet, daß das organische Halogenid der allgemeinen Formel

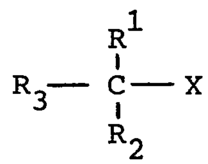

entspricht, wobei X ein Halogenatom ist,

$R_1, R_2, R_3$ $C_5$-$C_{10}$-Cycloalkyl, geradkettiges oder verzweigtes $C_1$-$C_{20}$-Alkyl oder

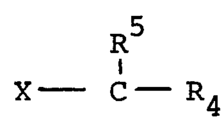

bedeuten, wobei

$R_4$ und $R_5$ $C_5$-$C_{10}$-Cycloalkyl oder geradkettiges oder verzweigtes $C_1$-$C_{20}$-Alkyl bedeuten,

und daß das organische Halogenid mindestens 5 C-Atome und maximal 50 C-Atome besitzt und in Konzentrationen von $10^{-1}$ bis $10^{-6}$ Mol pro Mol Monomer vorliegt, und daß als Metallhalogenid $BX_3$, $SnX_4$, $TiX_4$, $SbX_5$ oder $FeX_3$, wobei X Fluor, Chlor, Brom oder Jod sein kann, im 2 bis 500-fachen molaren Überschuß, bezogen auf das organische Halogenid, zugesetzt werden.

Als Monomere kommen kationisch polymerisierbare Monomere vom Typ 1-Buten, 2-Methylbuten, 4-Methyl-1-penten oder Vinylcyclohexan in Frage wie sie in der Monographie: "Cationic polymerization of olefins" von J.P. Kennedy, J. Wiley u. Sons, New York in Tab. 1, Abschnitt 1a-d, 39-41 beschrieben worden sind, also auch Vinylether wie z.B. Isobutylvinylether. Bevorzugtes Monomer ist Isobuten.

Vorzugsweise arbeitet man bei 0 bis -60°C in niedrigsiedenden Lösungsmitteln. Als geeignete Lösungsmittel kommen z.B. gesättigte Kohlenwasserstoffe wie Ethan, Propan, Butan oder Pentan sowie Chlorkohlenwasserstoffe wie Methylchlorid oder Methylenchlorid oder Mischungen davon in Betracht.

Als Metallhalogenide werden bevorzugt die Metallchloride eingesetzt, wobei $BCl_3$ besonders wirksam ist.

Bevorzugte Initiatoren sind solche, die an den C-Atomen $\alpha$-ständig zu den Halogenatomen keine Wasserstoffatome und an den ß-ständigen C-Atomen keine oder wenigstens 2 Wasserstoffatome tragen.

Besonders bevorzugt sind 2,5-Dichlor-2,5-dimethylhexan, 9,14-Dichlor-9,14-di-n-heptyl-docosan, 2,5,8-Trichlor-2,5,8-trimethylnonan, 2-Chlor-2,3,3-trimethylbutan, 2-Chlor-2,4,4,6,6-pentamethylheptan.

Beispiele

A. Herstellung der aromatischen Halogenverbindungen (Vergleich)

1. 2 Chloro-2-methyl-ethylbenzol (Cumylchlorid)
Diese Verbindung wurde nach der Vorschrift von Y. Okamoto und H.C. Brown, J. Am. Chem. Soc. 79, 1903 (1957) hergestellt

2. p-Di-(α,α-dimethyl-chloromethyl)benzol (Dicumylchlorid)
Die Herstellung erfolgte nach der Vorschrift von J.P. Kennedy und R.A. Smith, J. Polymer Sci., Polym. Chem. Ed. 18, 1523-37 (1980).

B. Herstellung der aliphatischen Halogenverbindungen

1. 2-Chloro-2-methyl-propan
Kaufprodukt, das vor dem Einsatz mit 5 %iger wäßriger $K_2CO_3$-Lösung gewaschen, danach mit Wasser, über $CaH_2$ getrocknet und durch Destillation gereinigt wurde.

2. 2-Chloro-2,4,4-trimethyl-pentan
15 ml 2,4,4-Trimethyl-penten-1 wurden in 150 ml $CH_2Cl_2$ gelöst auf -30°C abgekühlt und mit einer Mischung von 10,3 ml Thionylchlorid und 5,4 ml $H_2O$ tropfenweise versetzt. Danach erwärmte man die

Mischung auf 0°C und wusch sie nach 2,5 Stunden mit kalter 1 % wäßriger $K_2CO_3$-Lösung, danach mit eiskaltem Wasser. Das Produkt wurde über $MgSO_4$ getrocknet und destilliert. Ausbeute 85 %; $n_D^{20}$ = 1,4308; $Sdp_{10\ mm}$ 38°C.

3. 2,5-Dichlor-2,5-dimethylhexan
2,5-Dimethyl-1,5-hexadien wurde entsprechend Verbindung B2 mit Thionylchlorid umgesetzt.
Ausbeute: 81 %; Schmp. 64°C.

C. Durchführung der Polymerisationen

Die Polymerisation wurde in einer Hochvakuumapparatur aus Glas durchgeführt, indem man Isobuten und den Initiator in Methylenchlorid löste, die Mischung auf die gewünschte Temperatur abkühlte und $BCl_3$ zugab. Die Durchführung der Polymerisation und die Aufarbeitung der Produkte erfolgte wie in Makromol. Chem. 184, 553-562 (1983) beschrieben.

Beispiele 1-5

Experimentelle Bedingungen

| | |
|---|---|
| Initiator | $1,8.10^{-3}$ mol/l |
| Isobuten | 0,07 mol/l |
| Lösungsmittel | $CH_2Cl_2$ |
| Reaktionstemperatur | -80°C |
| Reaktionszeit | 30 Minuten. |
| $BCl_3$ | 0,2 mol/l |

| Beispiel | Initiator | Monomerumsatz (%) | $\overline{DPn}$ / $\overline{DPth}$ | Funktionalität theoretisch | Funktionalität gefunden |
|---|---|---|---|---|---|
| 1[1] | A 1 | 78 | -[2] | 1 | 0,65 |
| 2[1] | A 2 | 90 | 1 | 2 | 1,9 |
| 3[1] | B 1 | 17 | 9,5[3] | 1 | - |
| 4 | B 2 | 95 | 1 | 1 | 1 |
| 5 | B 3 | 94 | 1 | 2 | 2 |

1) Vergleichsbeispiel

2) multimodale Verteilung (GPC), daher Wert nicht bestimmbar

3) extrem hohes Molekulargewicht (~ 20.000), daher Funktionalität nicht bestimmbar.

Die Bestimmung des mittleren Polymerisationsgrades $\overline{DPn}$ erfolgte mit Hilfe der GPC. Es wurde ein Du Pont 830 HPLC Gerät verwendet mit der Säulenanordnung 10 µ, 500 Å, $10^4$ Å und $10^6$ Å sowie THF als Laufmittel. Als Eichsubstanzen wurden Polyisopren-Standards eingesetzt. Bei einer störungsfreien Polymerisation soll der so ermittelte Polymerisationsgrad $\overline{DPn}$ dem theoretischen Wert $\overline{DPth}$ entsprechen und die Beziehung $\overline{DPn}/\overline{DPth} = 1$ sein.

Die Funktionalität der Telechele wurde durch 1H-NMR-Messungen ermittelt, indem man die Intensitäten der Resonanzsignale aromatischer Protonen (I) mit den endständigen aliphatischen Protonen (II) verglich. Sie sollen

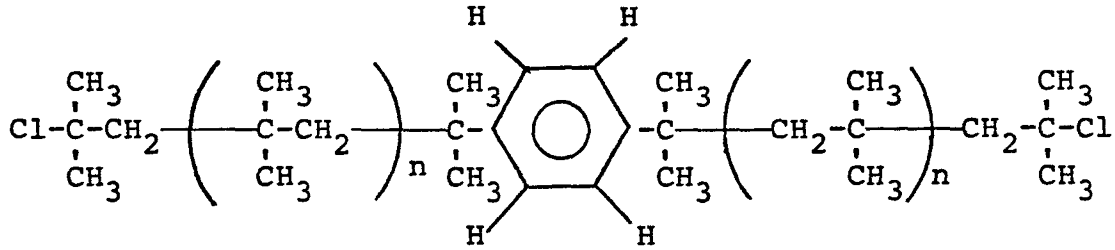

II III I III II

bei einer Funktionalität von 1 im Verhältnis I:II = 2:3 und bei einer Funktionalität von 2 im Verhältnis I:II = 1:3 vorliegen (Beispiel 1 und 2).

Die Funktionalität der durch aliphatische Initiatoren gestarteten Telechele wurde aus dem Intensitätsverhältnis endständiger Methylprotonen II, Methylenprotonen III und einer Chloranalyse des Polymeren ermittelt.

Wie man den Beispielen entnehmen kann, erhält man durch Einsatz der aromatischen Initiatoren (Beispiele 1 und 2) Polymere, deren Funktionalität niedriger ist als erwartet. Das Gleiche gilt auch für den niedermolekularen aliphatischen Initiator (Beispiel 3). Darüber hinaus zeigen die nach Beispielen 1 bis 3 hergestellten Polymeren bei der gelchromatographischen Trennung eine breite Molekulargewichtsverteilung.

Dagegen entsprechen die durch die erfindungsgemäßen Maßnahmen hergestellten Polymere dem erwarteten Polymerisationsgrad und der erwarteten Funktionalität.

## Beispiel 6-10

Man polymerisierte unter den gleichen Bedingungen wie bei Beispielen 1-5, jedoch bei -20°C.

| Beispiel | Initiator | Monomerumsatz (%) | $\overline{DP_n}$ / $\overline{DP_{th}}$ | Funktionalität theoretisch | Funktionalität gefunden |
|---|---|---|---|---|---|
| 6[1)] | A 1 | 57 | -[2)] | 1 | 0,53 |
| 7[1)] | A 2 | 92 | -[2)] | 2 | 1,75 |
| 8[1)] | B 1 | 11 | 12,3[3)] | 1 | - |
| 9 | B 2 | 94 | 1,0 | 1 | 1 |
| 10 | B 3 | 96 | 2,0 | 2 | 2 |

1) Vergleichsbeispiel
2) multimodale Verteilung
3) extrem hohes Molekulargewicht (~ 25.000)

Wie die Beispiele zeigen, wird die Wirksamkeit der erfindungsgemäßen Initiatoren (Beispiele 9, 10) gerade bei höheren Polymerisationstemperaturen sichtbar. Während bei Einsatz der üblichen aromatischen Initiatoren die Funktionalität der Produkte auf Grund von Nebenreaktionen zurückgeht (Beispiele 6-8), bleibt sie bei Einsatz der aliphatischen Initiatoren (Beispiele 9, 10) erhalten.

Patentansprüche

1. Verfahren zur Herstellung von Polymeren mit Halogenendgruppen aus kationisch polymerisierbaren Monomeren wobei man das Monomere in einem inerten Lösungsmittel bei +10°C bis -130°C mit Hilfe eines Katalysatorsystems aus einem Metallhalogenid und einem organischen Halogenid polymerisiert, dadurch gekennzeichnet, daß das organische Halogenid der allgemeinen Formel

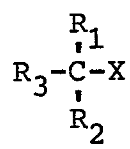

enspricht, wobei X ein Halogenatom ist,

$R_1$,$R_2$,$R_3$ $C_5$-$C_{10}$-Cycloalkyl, geradkettiges oder verzweigtes $C_1$-$C_{20}$-Alkyl oder

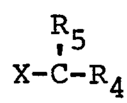

bedeuten, wobei

$R_4$ und $R_5$ $C_5$-$C_{10}$-Cycloalkyl oder geradkettiges oder verzweigtes $C_1$-$C_{20}$-Alkyl bedeuten,

und daß das organische Halogenid mindestens 5 C-Atome und maximal 50 C-Atome besitzt und in Konzentrationen von $10^{-1}$ bis $10^{-6}$ Mol pro Mol Monomer vorliegt, und daß als Metallhalogenid $BX_3$, $SnX_4$, $TiX_4$, $SbX_5$ oder $FeX_3$, wobei X Fluor, Chlor, Brom oder Jod sein kann, im 2-500-fachen molaren Überschuß, bezogen auf das organische Halogenid, zugesetzt werden.

2. Verfahren gemäß Anspruch 1, dadurch gekennzeichnet, daß man Isobutylen als Monomer einsetzt.

3. Verfahren gemäß Anspruch 1, dadurch gekennzeichnet, daß man als Metallhalogenid $BCl_3$, $SnCl_4$, $TiCl_4$, $SbCl_5$ oder $FeCl_3$ einsetzt.

4. Verfahren gemäß Anspruch 3, dadurch gekennzeichnet, daß man $BCl_3$ als Metallhalogenid einsetzt.

5. Verfahren gemäß Anspruch 1, dadurch gekennzeichnet, daß man bei Temperaturen von -15 bis -60°C arbeitet.